# EUROPÄISCHE PATENTSCHRIFT

(11) **EP 2 623 440 B1**
(45) Veröffentlichungstag und Bekanntmachung des Hinweises auf die Patenterteilung: **13.04.2016**
(21) Anmeldenummer: 12153974.6
(22) Anmeldetag: 06.02.2012
(51) Int. Cl.: B65G 43/00

(54) **Verfahren zum Betreiben einer Förderanlage**
Method for operating a conveyor system
Procédé de fonctionnement d'une installation de transport

(43) Veröffentlichungstag der Anmeldung: 07.08.2013
(73) Patentinhaber: Siemens Aktiengesellschaft, 80333 München (DE)
(72) Erfinder: Rasenack, Wolf-Martin, 91080 Marloffstein (DE)

(56) Entgegenhaltungen:
- EP-A1- 0 414 939
- WO-A1-01/53174
- DE-A1- 2 252 709
- US-A- 3 923 151

## Beschreibung

Die Erfindung betrifft ein Verfahren zum Betreiben einer Förderanlage mit einem Gurt und mindestens einer Antriebstrommel zum Antreiben des Gurtes.

Förderanlagen, beispielsweise Muldenförderer oder Rohrgurtförderer umfassen einen Gurt, welcher zum Fördern von Fördergut dient und mindestens eine Antriebstrommel, mit deren Hilfe der Gurt angetrieben werden kann. Des Weiteren weisen Förderanlagen Umlenktrommeln sowie ein Antriebssystem zum Antreiben der Antriebstrommel auf. Dieses Antriebssystem umfasst wiederum ein Getriebe und einen Motor. Insbesondere bei längeren Förderbändern werden zum Antreiben und steuern des Motors bzw. der Motoren ein oder mehrere Frequenzumrichter eingesetzt.

Soll die Geschwindigkeit des Gurtes verändert werden, beispielsweise beim Anfahren oder Anhalten der Förderanlage, so ist es das Ziel, den Gurt möglichst verspannungsfrei von einem Geschwindigkeitsniveau auf ein anderes Geschwindigkeitsniveau zu bringen, also die Antriebstrommel von einer ersten Drehzahl auf eine zweite Drehzahl zu verzögern oder zu beschleunigen. Insbesondere beim Anhalten der Förderanlage ist es wünschenswert, den Gurt möglichst wenig zu verspannen. Ein derartiges Betreiben der Förderanlage schont den Gurt und vereinfacht dann außerdem ein Wiederanfahren.

Um die Geschwindigkeit des Gurtes zu verändern, werden mittels des Frequenzumrichters Drehzahlen und deren zeitliche Verläufe vorgegeben, mit denen der Motor und die damit angetriebene Antriebstrommel drehen soll. Der Verlauf einer entsprechenden Drehzahlkennlinie wird dabei über einen Hochlaufgeber so geglättet und angepasst, dass nur geringe Drehmoment- oder Kraftstöße auf das Material, also insbesondere die Antriebstrommel und den Gurt, wirken. Hierzu können die Hoch- und Rücklaufzeiten sowie Verrundungszeiten der Drehzahlkennlinie zur Ruckbegrenzung angegeben werden. Unter Verrundung der Drehzahlkennlinie ist dabei zu verstehen, dass die Drehzahlen der Antriebstrommel sich nicht ruckartig, sondern stetig ändern. So weist beispielsweise bei einem Beschleunigungsvorgang die Drehzahlkennlinie keine echte Rampenform auf, sondern diese ist sowohl am Anfang als auch am Ende abgerundet, so dass diese einen S-Verschliff aufweist. Trotz einer derartigen Gestaltung der Drehzahlkennlinie erfolgt bei der Drehzahländerung eine ungewollte Verspannung des Gurtes. Insbesondere beim Anhalten der Förderanlage steigt kurz vor Stillstand des Gurtes bis zum Ausschaltzeitpunkt der Umrichter das Drehmoment massiv an. Zum Ausschaltzeitpunkt wird das Drehmoment schlagartig auf null gesetzt. Der vorangegangene Drehmomentanstieg verspannt jedoch nur den Gurt und hat keinen positiven Effekt auf den Anhaltevorgang. Nach dem Ausschalten der Umrichter schnellt durch dessen Verspannung der Gurt zurück, die Drehzahl macht einen merklichen Impuls in negative Richtung. Durch dieses Zurückschnellen entspannt sich der Gurt etwas. Um eine derartige Verspannung und das anschließende Zurückschnellen des Gurtes zu vermeiden, werden bisher die Rücklaufzeiten und Verrundungszeiten angepasst. Jedoch führt auch dies lediglich zu einer geringfügigen Verbesserung.

Aus der WO 01/53174 A1 ist ein Verfahren zum Steuern des Hochlaufs einer Förderanlage mit einem Gurt und mindestens einer Antriebstrommel zum Antreiben des Gurtes bekannt, bei dem in einem ersten Zeitabschnitt der Soll-Wert der Geschwindigkeit des Gurtes mit zunehmender Beschleunigung und in einem zweiten Zeitabschnitt mit abnehmender Beschleunigung erhöht wird. Aber auch durch ein derartiges Verändern der Geschwindigkeit treten die oben genannten Effekte auf.

In der US 3 923 151 A ist ein Regelungssystem für ein endloses Förderband beschrieben, bei dem beim Beschleunigen oder beim Bremsen eine Verspannung des Förderbands ermittelt wird und in Abhängigkeit der Verspannung ein Drehmoment angepasst wird, damit das Förderband nicht einer zu hohen Belastung ausgesetzt wird.

Aus der EP 0 414 939 A1 geht eine schwingungsfreie Anfahr- und Bremsregelung für Förderanlagen hervor, bei der ein Momentensollwert geregelt wird.

Es ist daher Aufgabe der vorliegenden Erfindung ein Verfahren vorzuschlagen, mit dem beim Verändern der Geschwindigkeit des Gurtes dessen Verspannung weitestgehend vermieden wird.

Gemäß der Erfindung wird die Aufgabe gelöst mit einem Verfahren zum Betreiben einer Förderanlage mit den Merkmalen des Patentanspruches 1.

Erfindungsgemäß wird bei dem Betreiben einer Förderanlage mit einem Gurt und mindestens einer Antriebstrommel zum Antreiben des Gurtes zum Verändern der Geschwindigkeit des Gurtes innerhalb eines durch eine erste Drehzahl der Antriebstrommel und eine zweite Drehzahl der Antriebstrommel definierten Zeitfensters das auf die Antriebstrommel wirkende Drehmoment gesteuert, **wobei das Drehmoment innerhalb des Zeitfensters stetig verläuft und wobei das Zeitfenster mindestens so lang ist wie die Austrudeltzeit der Förderanlage.**

Somit wird also gemäß der Erfindung nicht mehr, wie aus dem Stand der Technik bekannt, die Drehzahl der Antriebstrommel, sondern das auf die Antriebstrommel wirkende Drehmoment vorgegeben. Dies hat den Vorteil, dass mittels des explizit vorgegebenen Drehmoments auch die durch die Antriebsrolle auf den Gurt wirkende Kraft vorgegeben wird und diese daher so auf sanfte Art und Weise verändert werden kann, dass der Gurt von einem Geschwindigkeitsniveau besonders schonend auf ein anderes Geschwindigkeitsniveau gebracht werden kann, so dass eine Verspannung des Gurtes vermieden wird. Hierzu dient insbesondere die Wahl des durch die erste Drehzahl und zweite Drehzahl definierten Zeitfensters. Dieses Zeitfensters wird so gewählt, dass dessen Länge eine nicht zu abrupte Änderung des Drehmoments bewirkt, so dass also durch die Drehmomentänderung ein sanftes Beschleunigen, bzw. Abbremsen der Antriebstrommeln und somit des Gurtes ermöglicht wird.

Außerdem spielen bei der erfindungsgemäßen Vorgabe des Drehmoments Unwägbarkeiten wie z.B. Temperaturabhängigkeit, Beladungszustand oder Gurtalter bei der Drehmomentsteuerung im Vergleich zur Vorgabe der Drehzahl keine so große Rolle. Das Drehmoment wird also durch die Drehmomentvorgabe gezwungen, den vorgegebenen Wert anzunehmen, also beispielsweise im Falle des Anhaltens des Gurtes kontinuierlich geringer zu werden. Das Drehmoment kann in einem derartigen Fall auch durch sonstige Einflüsse nicht mehr ansteigen. Bei Stillstand des Gurtes ist das Drehmoment gleich null, wodurch ein Zurückschnellen des Gurtes ausgeschlossen ist. Hiermit wird der Gurt also maximal schonend bewegt.

Ein besonders sanftes Beschleunigen oder Bremsen des Gurtes wird dadurch erreicht, dass das Drehmoment innerhalb des Zeitfensters stetig verläuft. Somit kann beispielsweise im Fall des Anhaltens des Gurtes eine negativ steigende Drehmomentrampe durchfahren werden, so dass die durch das Zeitfenster definierte Anhaltezeit mindestens so lang ist wie die Austrudelzeit der Förderanlage, also die Zeit, die der Gurt von seinem Betriebszustand bis zum Stillstand benötigt, wenn er auf Grund seiner Reibung abgebremst wird. Bevorzugt ist das Zeitfenster doppelt, insbesondere dreimal so lang wie die Austrudelzeit, die typischerweise eine Dauer von etwa 3s bis 20s hat.

Bei einer bevorzugten Ausgestaltung der Erfindung ist die erste Drehzahl kleiner als die zweite Drehzahl und das Drehmoment innerhalb des Zeitfensters wird derart gesteuert, dass es monoton steigend ist. Somit wird die Geschwindigkeit der Antriebstrommel beziehungsweise des Gurtes gesteigert, indem eine explizite monoton steigende Drehmomentrampe durchfahren wird.

Umgekehrt kann der Gurt sanft in seiner Geschwindigkeit reduziert werden, indem die erste Drehzahl größer ist als die zweite Drehzahl und das Drehmoment innerhalb des Zeitfensters derart gesteuert wird, dass es monoton fallend ist.

Wenn die zweite Drehzahl gleich null ist, kann auf die erfindungsgemäße Art und Weise ein Gurt angehalten werden, ohne dass es zu Verspannungen kommt, da durch die Aufprägung eines kontinuierlich abfallenden Drehmoments bis auf null ein Ansteigen des Drehmoments vor dem Stillstand des Gurtes verhindert wird. Somit wird eine Verspannung des Gurtes ebenso wie ein Zurückschnellen des Gurtes, nachdem das Drehmoment Null erreicht, vermieden.

Bevorzugt wird nach dem Anhalten des Gurtes, also nachdem der Gurt den Stillstand erreicht hat, dieser mittels einer Feststellbremse fixiert, damit er nicht durch Eigengewicht oder beladenes Material wieder beschleunigt wird.

Wenn das Drehmoment einen linearen Verlauf hat, ist dieses Verfahrens besonders einfach zu realisieren, insbesondere einfacher als die aus dem Stand der Technik bekannte Vorgabe einer Drehzahl mit einer bestimmten Kennlinie.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Für eine weitere Beschreibung der Erfindung wird auf die Ausführungsbeispiele der Zeichnungen verwiesen. Es zeigt in einer schematischen Prinzipskizze:
- Fig. 1: eine Förderanlage,
- Fig. 2: den Drehzahlverlauf einer Antriebstrommel während eines Anhaltevorgangs gemäß dem Stand der Technik,
- Fig. 3: den Drehmomentverlauf während des in Fig. 2 dargestellten Anhaltevorgangs,
- Fig. 4: den erfindungsgemäßen Verlauf des Drehmoments während eines Anhaltevorgangs,
- Fig. 5: den zu Fig. 4 korrespondierenden Drehzahlverlauf.

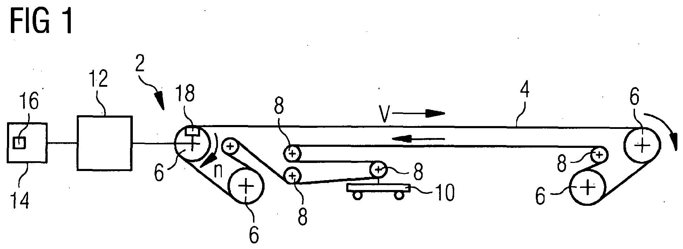

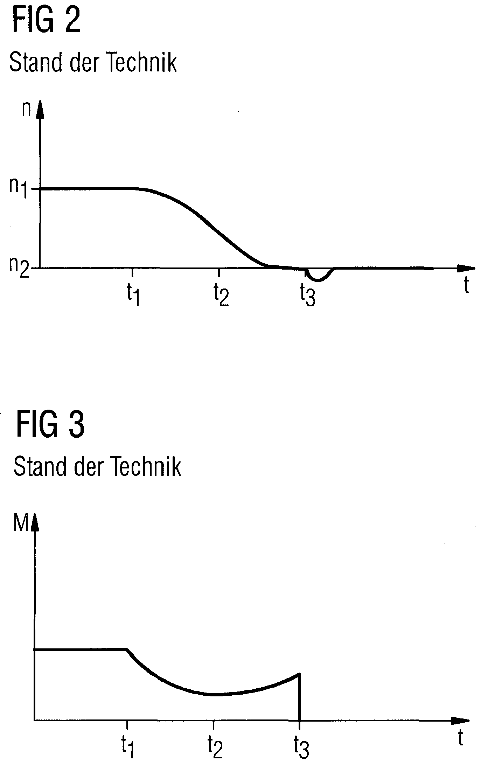

Fig. 1 zeigt eine Förderanlage 2 mit einem Gurt 4 und insgesamt vier Antriebstrommeln 6 zum Antreiben des Gurtes 4. Damit der Gurt 4 in entsprechendem Umfang an den Antriebstrommeln 6 anliegt, umfasst die Förderanlage 2 mehrere Umlenktrommeln 8. Um eine ausreichende Spannung des Gurtes auch bei unterschiedlichen Temperaturen und bei unterschiedlicher Beladung des Gurtes 4 zu erreichen, ist entlang des Gurtes 4 auch ein Spannwagen 10 angeordnet, der so verfahren werden kann, dass eine ausreichende Spannung des Gurtes 4 erzielt wird. Exemplarisch ist in Fig. 2 an einer Antriebstrommel 6 ein Motor 12 eingezeichnet, der mit einem Umrichter 14 mit einer Steuereinrichtung 16 verbunden ist. Durch den Motor 12 wird die Antriebstrommel 6 in Drehung versetzt, so dass diese auf den Gurt 4 eine Kraft ausübt. Im Betriebszustand dreht sich somit der Gurt 4 in Richtung der eingezeichneten Pfeile mit einer vorgegebenen Geschwindigkeit v. Diese Geschwindigkeit v wird anhand der Drehzahl n der Antriebstrommeln 6 eingestellt.

Soll nun die Geschwindigkeit v des Gurtes 4 verändert werden, so wird bisher mit Hilfe des Umrichters 14 der Motor 12 derart beeinflusst, dass die Drehzahl n der Antriebstrommel 6 verändert wird. Mittels der Steuereinrichtung 16 wird daher ein Verlauf der Drehzahl n der Antriebstrommeln 6 vorgegeben. Im Folgenden wird nur jeweils auf eine Antriebstrommel 6 Bezug genommen. Die jeweiligen Aussagen gelten aber bei Vorhandensein mehrerer Antriebstrommeln 6 auf diese entsprechend.

Ein derartiger vorgegebener Verlauf der Drehzahl der Antriebstrommel 6 ist beispielhaft für einen Anhaltevorgang des Gurtes 4 in Fig. 2 dargestellt. In Fig. 3 ist der entsprechende Drehmomentverlauf aufgezeigt ist. Bis zum Zeitpunkt t₁ dreht sich die Antriebstrommel 6 mit einer ersten Drehzahl n₁. Der Gurt 4 befindet sich dabei in seinem Betriebszustand und wird mit der Geschwindigkeit v bewegt.

Zum Verändern der Geschwindigkeit v des Gurtes 4, in diesem Fall zum Anhalten, wird die Drehzahl n der Antriebstrommel 6 gemäß einer vordefinierten, nahezu rampenförmigen Drehzahlkennlinie mittels des Umrichters 14 und des Motors 12 reduziert. In diesem Fall ist die zweite Drehzahl n₂ gleich null. Die Drehzahlkennlinie weist Verrundungen jeweils am Anfang und Ende der Rampe auf, damit keine Kraftstöße, die ungünstig auf den Gurt 4 wirken würden, auf diesen ausgeübt werden. Durch das Reduzieren der Drehzahl n zwischen den Zeitpunkten t₁ und t₂ erfolgt zeitgleich auch eine Reduzierung des Drehmoments M. Allerdings erfolgt nach dem Überschreiten des Zeitpunktes t₂ ein Ansteigen des Drehmoments M, das zu einer Verspannung des Gurtes führt. Nach dem Stillstand des Gurtes 4 und dem damit verbundenen Abschalten des Umrichters 14 wird das Drehmoment M auf null gesetzt, was jedoch dazu führt, dass durch die in dem Gurt 4 gespeicherte Verspannungsenergie die Drehzahl n einen kurzen negativen Impuls bekommt. Ein derartiges Verhalten des Gurtes 4 kann jedoch zu raschem Materialverschleiß führen.

Erfindungsgemäß wird daher nicht die Drehzahl n der Antriebstrommel 6 vorgegeben, sondern es wird das auf die Antriebstrommel 6 wirkende Drehmoment M gesteuert, also vorgegeben.

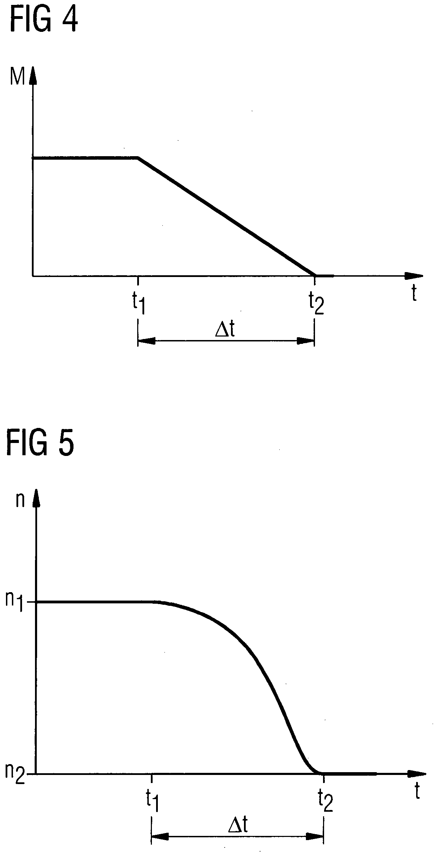

Eine Drehmomentkennlinie bei Anwendung des erfindungsgemäßen Verfahrens ist nun in Fig. 4 dargestellt. Dabei wird zum Verändern der Geschwindigkeit v des Gurtes 4, in diesem Falle ebenfalls wieder zum Anhalten des Gurtes 4, während eines durch eine erste Drehzahl n₁ der Antriebstrommel 6 und eine zweite Drehzahl n₂ der Antriebstrommel 6 definierten Zeitfensters Δt das auf Antriebstrommel 6 wirkende Drehmoment M gesteuert. Diese Steuerung erfolgt mittels der im Frequenzumrichter 14 implementierten Steuereinrichtung 16, so dass der Motor 12 derart angetrieben wird, dass das vorgegebene Drehmoment M auf die Antriebstrommel 6 wirkt und diese wiederum auf den Gurt 4 eine Kraft ausübt. Die Steuereinrichtung 16 muss dabei nicht zwingend im Umrichter 14 implementiert sein, sondern kann sich auch außerhalb befinden.

Eine derartige Drehmomentkennlinie muss nun so gestaltet sein, dass sich eine besonders sanfte Verzögerung des Gurtes 4 ergibt, so dass dieser nicht verspannt wird. Zum einen spielt die Dauer des Zeitfensters Δt eine wesentliche Rolle. Dieses wird allgemein durch die Zeitpunkte t₁, bei dem die Antriebstrommel 6 eine erste Drehzahl n₁ aufweist und den Zeitpunkt t₂, bei dem die Antriebstrommel eine zweite Drehzahl z.B. n₂=0 aufweist, definiert. Dieses Zeitfenster Δt muss ausreichend groß gewählt werden, so dass auch das Drehmoment M keinen ruckartigen Verlauf aufzeigt. Im Beispiel ist es deutlich länger als die Austrudelzeit der Förderanlage, damit die Motoren 12 den Gurt 4 sanft bremsen und nicht ruckartig stoppen. Zum anderen ist die Form der Drehmomentkennlinie von besonderer Bedeutung. Damit eine verspannungsfreie Verzögerung des Gurtes 4 erreicht wird, wird das mittels der Antriebstrommel 6 auf den Gurt 4 wirkende Drehmoment M derart gesteuert, dass es monoton abnimmt. Im Beispiel verläuft das Drehmoment M linear von einem Ausgangswert bis auf null. Diese Reduzierung des Drehmoments M bewirkt eine Abnahme der Drehzahl n von einer ersten Drehzahl n₁ bis auf eine zweite Drehzahl n₂=0, wie es in Fig. 5 dargestellt ist. Nach dem Erreichen der zweiten Drehzahl n₂ der Antriebstrommel 6, in diesem Fall also bei Stillstand des Gurtes 4, wird dieser mittels einer Feststellbremse 18 fixiert, damit er nicht durch Eigengewicht oder beladenes Material wieder beschleunigt wird.

Somit wird gemäß des erfindungsgemäßen Verfahrens die Geschwindigkeit v des Gurtes explizit durch eine Vorgabe eines Drehmoments M geändert und nicht wie oben aufgezeigt im Stand der Technik über eine Drehzahlvorgabe. Dadurch werden Verspannungen des Gurtes 4 vermieden. Beim Abschalten der Umrichter 14, was nach dem Ende des Zeitfensters Δt, also bei Erreichen der zweiten Drehzahl n₂=0, geschieht, erfolgt daher kein Zurückschnellen des Gurtes.

Bei Förderanlagen ist die Durchführung dieses Verfahrens auf Grund der Drehzahl-Drehmoment-Charakteristik möglich, da das nötige Drehmoment M schon bei geringen Drehzahlen n auf einem sehr hohen Niveau ist, im Gegensatz zur Antriebsleistung geringe Beschleunigungsmomente aufzubringen sind und die nötigen Drehmomente M bei hohen Geschwindigkeiten v nicht linear mit der Geschwindigkeit v zunehmen, sondern deutlich weniger.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Förderanlage (2) mit einem Gurt (4) und mindestens einer Antriebstrommel (6) zum Antreiben des Gurtes (4), bei dem zum Verändern der Geschwindigkeit des Gurtes (4) innerhalb eines durch eine erste Drehzahl (n₁) der Antriebstrommel (6) und eine zweite Drehzahl (n₂) der Antriebstrommel (6) definierten Zeitfensters (Δt) das auf die Antriebstrommel (6) wirkende Drehmoment (M) gesteuert wird, wobei das Drehmoment (M) innerhalb des Zeitfensters (Δt) stetig,verläuft und wobei das Zeitfenster (Δt) mindestens so lang ist wie die Austrudelzeit der Förderanlage (2).

2. Verfahren nach Anspruch 1,
bei dem die erste Drehzahl (n₁) kleiner ist als die zweite Drehzahl (n₂) und das Drehmoment (M) innerhalb des Zeitfensters (Δt) derart gesteuert wird, dass es monoton steigend ist.

3. Verfahren nach Anspruch 1,
bei dem die erste Drehzahl (n₁) größer ist als die zweite Drehzahl (n₂) und das Drehmoment (M) innerhalb des Zeitfensters (Δt) derart gesteuert wird, dass es monoton fallend ist.

4. Verfahren nach Anspruch 3,
bei dem die zweite Drehzahl (n₂) Null ist.

5. Verfahren nach Anspruch 4,
bei dem nach dem Erreichen der zweiten Drehzahl (n₂) der Antriebstrommel (6) der Gurt (4) mittels einer Feststellbremse (18) fixiert wird.

6. Verfahren nach einem der vorhergehenden Ansprüche,
bei dem das Drehmoment (M) innerhalb des Zeitfensters (Δt) linear verläuft.

## Claims

1. Method for operating a conveyor installation (2) comprising a belt (4) and at least one drive drum (6) for driving said belt (4), wherein the torque (M) acting on the drive drum (6) is controlled, in order to alter the speed of the belt (4), within a time window (Δt) that is defined by a first rotational speed (n₁) of the drive drum (6) and a second rotational speed (n₂) of the drive drum (6), wherein the torque (M) runs steadily within the time window (Δt) and wherein the time window (Δt) is at least as long as the coasting time of the conveyor installation (2).

2. Method according to claim 1,
wherein the first rotational speed (n₁) is lower than the second rotational speed (n₂) and the torque (M) is controlled within the time window (Δt) such that it is monotonically increasing.

3. Method according to claim 1,
wherein the first rotational speed (n₁) is greater than the second rotational speed (n₂) and the torque (M) is controlled within the time window (Δt) such that it is monotonically decreasing.

4. Method according to claim 3,
wherein the second rotational speed (n₂) is zero.

5. Method according to claim 4,
wherein after reaching the second rotational speed (n₂) of the drive drum (6) the belt (4) is fixed by means of a fixing brake (18).

6. Method according to any one of the preceding claims,
wherein the torque (M) runs linearly within the time window (Δt).

## Revendications

1. Procédé pour faire fonctionner une installation (2) de transport ayant une courroie (4) et au moins un tambour (6) d'entraînement de la courroie (4), dans lequel, pour modifier la vitesse de la courroie (4) dans une fenêtre (Δt) de temps définie par une première vitesse (n₁) de rotation du tambour (6) d'entraînement et par une deuxième vitesse (n₂) de rotation du tambour (6) d'entraînement, on commande le couple (M) de rotation s'appliquant au tambour (6) d'entraînement, le couple (M) de rotation étant constant dans la fenêtre (Δt) de temps, et la fenêtre (Δt) de temps étant au moins aussi longue que le temps de marche par inertie de l'installation (2) de transport.

2. Procédé suivant la revendication 1, dans lequel la première vitesse (n₁) de rotation est plus petite que la deuxième vitesse (n₂) de rotation, et on commande le couple (M) de rotation dans la fenêtre (Δt) de temps de manière à ce qu'il croisse d'une façon monotone.

3. Procédé suivant la revendication 1, dans lequel la première vitesse (n₁) de rotation est plus grande que la deuxième vitesse (n₂) de rotation et on commande le couple (M) de rotation dans la fenêtre (Δt) de temps de manière à ce qu'il décroisse de manière monotone.

4. Procédé suivant la revendication 3, dans lequel la deuxième vitesse (n₂) de rotation est nulle.

5. Procédé suivant la revendication 4, dans lequel, après avoir atteint la deuxième vitesse (n₂) de rotation du tambour (6) d'entraînement, on immobilise la courroie (4) au moyen d'un frein (18) d'arrêt.

6. Procédé suivant l'une des revendications précédentes, dans lequel le couple (M) de rotation est linéaire dans la fenêtre (Δt) de temps.
